Europäisches Patentamt

European Patent Office

Office européen des brevets

(11) Veröffentlichungsnummer: **0 280 842**
A1

# EUROPÄISCHE PATENTANMELDUNG

(21) Anmeldenummer: **88100091.3**

(22) Anmeldetag: **07.01.88**

(51) Int. Cl.⁴: **B64G 1/52**

(30) Priorität: **29.01.87 DE 3702584**

(43) Veröffentlichungstag der Anmeldung:
**07.09.88 Patentblatt  88/36**

(84) Benannte Vertragsstaaten:
**FR GB IT**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Marondel, Manfred
Grünestrasse 4
D-2863 Ritterhude(DE)**

(54) **Notfallraumfahrzeug.**

(57) Die Erfindung betrifft ein Notfallraumfahrzeug, welches im Normalfall an einer Raumstation angekoppelt ist, und im Falle einer Nichtbenutzbarkeit dieser Raumstation die Besatzungsmitglieder beherbergt sowie es ihnen ermöglicht, selbsttätig eine andere Raumstation zu erreichen, an diese anzulegen und überzuwechseln.

FIG. 1

EP 0 280 842 A1

## Notfallraumfahrzeug

Die Erfindung betrifft ein bemannbares Raumfahrzeug, welches im Normalbetrieb einer bemannten Raumstation an dieser angekoppelt und von dieser überwacht, mit Energie und Atemluft versorgt wird und im Falle einer Nichtbenutzbarkeit der Raumstationen es den Astronauten ermöglicht, zu einer anderen funktionsfähigen Raumstation oder zu einem anderen Raumfahrzeug zu gelangen. Zudem besteht die Möglichkeit, bei Beibehaltung der Bahn der havarierten Raumstation einen gefahrlosen Aufenthalt im abgekoppelten Notfallraumfahrzeuges solange sicherzustellen, bis Hilfe eingetroffen ist.

Die Besatzungen bemannter Raumstationen werden gegenwärtig mit Hilfe von Raumfahrzeugen zu Raumstationen gebracht und mit diesen zur Erde zurückbefördert. Dabei bleibt immer ein Raumfahrzeug während der Missionsdauer an der Raumstation gekoppelt, um den Astronauten im Notfall ein schnelles Zurückkehren zur Erde zu ermöglichen. Insbesondere bei der Nutzung von wiederverwendbaren Raumfahrzeugen (z.B. Space Shuttle) für den Transport von Astronauten, ist ein Stationieren einer solchen Raumfähre an der Raumstation ökonomisch nicht zu vertreten, da diese während der Missionsdauer der zur Raumstation beförderten Astronauten andere Transpotaufgaben verrichten kann.

Da bei einem bloßen Absetzen der Astronauten in der Raumstation diese im Falle einer lebensbedrohenden Fehlfunktion dieser ohne eine schnelle Rückkehrmöglichkeit zur Erde sind, wird ein Notfallraumfahrzeug vorgeschlagen, welches während der gesamten Nutzungsdauer der Raumstation an dieser gekoppelt ist und nur im Notfall als Freiflieger selbsttätig im Weltraum operiert.

Die bisher bekannt gewordenen Rettungseinrichtungen für Besatzungen von Raumstationen gehen von Rückkehrkapseln aus, mit denen die Besatzung die unverzügliche Rückreise zur Erdoberfläche antreten kann. Solche Rückkehrkapseln haben den Nachteil, daß bei einem sehr schnellen Verlassen der Raumstation durch die Astronauten nur sehr begrenzt die Wahl des Rückkehrzeitpunktes und des Landeortes möglich ist, da aus Gewichts-, Energie-und Volumengründen die Steuerbarkeit und selbsttätige Aufendhaltsdauer im Weltraum gering ist. Dies kann bei einer durchgeführten Notrückkehr zur Erde zu einer Landung in einem Gebiet mit ungünstigen Witterungsverhältnissen und - schlechten Rettungsmöglichkeiten durch Schiffe oder Landfahrzeuge führen.

Ein weiterer Nachteil ist, daß die bei dem Wiedereintritt in die Erdatmosphäre auftretenden Beschleunigungskräfte Konturensitze für die zu rettenden Besatzungsmitglieder erfordern. Die Anordnung dieser Sitze im Notfallraumfahrzeug erforder aber einen relativ großen Raumbedarf und hohes Gewicht, insbesondere wenn die Mannschaftsstärke der Raumstation auf eine realistische Anzahl von sechs bis acht Astronauten ansteigt.

Die Aufgabe der Erfindung ist es, die genannten Nachteile zu vermeiden und den Astronauten einen sicheren Zufluchtsort für einen Notfall bereitzustellen.

Die erfinderische Lösung dieser Aufgabe ergibt sich aus den Merkmalen des Hauptanspruches. Vorteilhafte Ausgestaltungen und Weiterbildungen sind den Unteransprüchen zu entnehmen.

Von besondere Bedeutung für den Lösungsgedanken der Erfindung ist, daß ein Raumfahrzeug vorgestell werden soll, welches im Notfall den Besatzungsmitgliedern einen längeren Aufenthalt in ihm gestattet, und mit welchem diese aktiv eine andere bemannte oder bemannbare Raumstation ansteuern, an diese anlegen und überwechseln können.

Die Zeichnung erläutert ein Ausführungsbeispiel der Erfindung. Es zeigen:

Fig. 1 ein Notfallraunfahrzeug auf der Basis eines "Spacelab"-Druckmoduls, gekoppelt an eine Raumstation.

Fig. 2 einen Längsschnitt durch das Notfallraumfahrzeug,

Fig. 3 einen Querschnitt durch das Notfallraumfahrzeug.

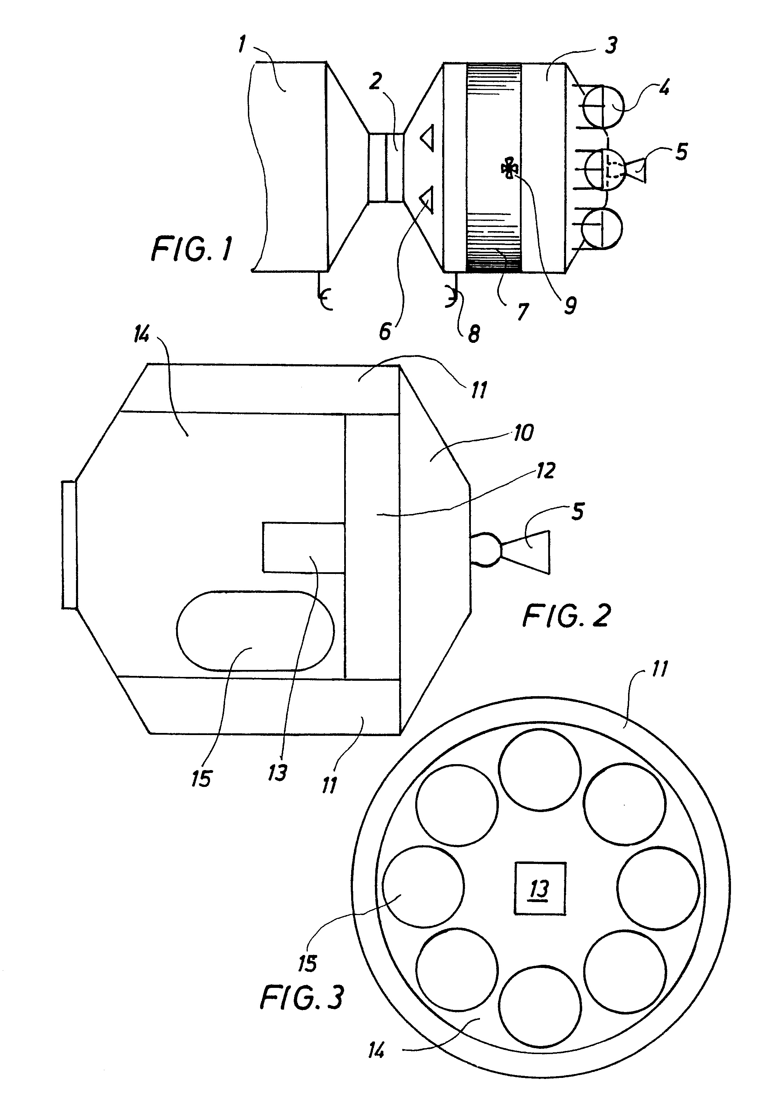

Ausgehend von dem kürzesten "Spacelab"-Druckmodul wird ein Notfallraumfahrzeug dadurch geschaffen, daß dieses Druckmodul 3 mit einem eigenen Antrieb, Navigations-, Lageregelungs-und Lebenserhaltungseinrichtungen sowie Lagerräumen für Nahrung, Atemluft und Battarien versehen wird. Die Oberfläche des Druckmoduls ist in bekannter Weise mit einem Solargenerator 7 sowie mit Radiatorflächen belegbar (Fig. 1).

Der Antrieb des Notfallraumfahrzeuges erfolgt mit einem Triebwerk 5 oder einer Triebwerkskombination. Vorzugsweise kommt ein lagerfähiger Treibstoff zur Anwendung, der sich in Tanks 4 außerhalb des Druckmoduls 3 befindet. An der Außenseite des Druckmoduls 3 befinden sich Lageregelungstriebwerke 9, die in einer vorteilhafen Ausführung der Erfindung ebenfals mit dem gleichen Treibstoff versorgt werden wie der Hauptantrieb 5.

An der Stirnseite des Druckmoduls 3 befindet sich ein Kopplungsstutzen 2, der im Normaltrieb das Notfallraumfahrzeug mit der Raumstation 1 verbindet. Nach dem Ablegen von der Raumstation 1 ist mit Hilfe an dieser Seite angebrachter Einrichtungen 8 sowie den Fenstern 6 Navigation und Kommunikation zu und mit anderen Raumstation oder Raumfahrzeugen möglich. Die Außenseite des Notfallraumfahrzeuges ist nach Bedarf mit einem Solargenerator 7 und Wärmeradiatoren belegbar.

Der in Figur 2 dargestellte Längsschnitt durch das Notfallraumfahrzeug zeigt in einem Ausführungsbeispiel die Raumaufteilung für Triebwerkseinrichtungen und Battarien 10, Lebenserhaltungssysteme 12, Steuerungs-und Kontrolleinrichtungen 13, Lagerräume für Atemluft und Nahrungsmittel 11, sowie den Besatzungsraum 14 mit den Aufenthaltsbereichen 15 für die Besatzungsmitglieder.

Da davon auszugehen ist, daß zukünfige Raumstationen, beispielsweise Raumstationen der UDSSR, Europas sowie der internationalen US-Raumstation, über gleiche Kopplungssysteme und ähnliche Atemluftversorgung verfügen, und zudem auf ähnlichen Umlaufbahnen die Erde umkreisen, ist das erfindungsgemäße Notfall-Raumfahrzeug einfacher, sicherer und ökonomischer als die bisher vorgesehene Notfall-Rückkehrkapsel, zumal letzteres nicht wiederverwendbar ist.

Die Vorteile des erfindungsgemäßen Notfallraumfahrzeuges werden insbesondere dann deutlich, wenn eine schnelle Notrückkehr der Besatzungs mit der bisher vorgeschlagenen Notfall-Rückkehrkapsel notwendig wird, und aufgrund widriger Witterungsbedingungen auf der Erde sowie Zeitmangel ein schnelles Erreichen des Landeplatzes für die Astronauten nicht möglich ist. Im Gegensatz dazu kann bei der hier vorgeschlagenen Lösung schnell und sicher eine andere Raumstation erreicht werden, und eine geordnete Rückkehr mit beispielsweise einem Raumtransporter organisiert werden.

Ähnlich wie bei Unfällen auf den Anktartis-Forschungsstationen wird man eine Rückkehr zu den Heimatländern nicht antreten, sondern den sicheren Weg zu benachbarten Station wählen.

Bezugsziffernliste:

1: Raumstation
2: Kopplungsstutzen
3: Druckmodul
4: Treibstofftank
5: Hauptantrieb
6: Fenster
7: Solargenerator
8: Navigations-und Kommunikationseinrichtungen
9: Lageregelungstriebwerke
10: Raum für Battarien, Antriebs-und Lageregelungeinrichtungen

11: Lagerraum für Atemluft, Wasser, Nahrung, Abfall, Geräte
12: Raum für Lebenserhaltungssysteme und Klimaanlage
13: Zentrale Steuerungs-und Komunikationseinheit
14: Besatzungsraum
15: Aufendhaltsposition eines Besatzungsmitgliedes

**Ansprüche**

1. Notfallraumfahrzeug als Zufluchtsort und Transportmittel für Besatzungsmitglieder von havarierten Raumstationen und/oder Raumfahrzeugen, welches im Normalfall mit einer Raumstation verbunden ist, von dieser überwacht sowie mit Energie und Atemluft versorgt wird, **dadurch gekennzeichnet**, daß das Notfallraumfahrzeug aus einem zylinderförmigen Druckkörper (3) besteht, dessen Enden durch Konen gebildet werden, daß sich in dem vordern Druckkörperkonus Fenster (6) befinden und daß an dessen Stirnseite eine durchsteigbare Kopplungseinrichtung (2) vorhanden ist, daß an der hinteren Stirnseite des Druckkörperkonus ein Haupttriebwerk (5) angeordnet ist, welches aus Treibstofftanks (4), die sich an der Oberseite des hinteren Druckkörperkonus befinden, mit lagerfähigen Treibstoff versorgt werden, daß der Innenraum des Notfallraumfahrzeuges aus einem Aufenthaltsraum (14) für die Besatzungsmitglieder (15), einem um den Aufenthaltsraum (14) ringförmig angeordneten Lagerraum (11) für Atemluft, Nahrungsmittel, Raumanzüge und andere Hilfsgeräte, einem in hinteren Druckkörperkonus befindlichen Raum (10) für Battarien und Antriebseinrichtungen und einem im hinteren Teil des Druckkörperzylinders (3) vorgesehenen Raum (12) für Lebenserhaltungseinrichtungen und Klimaanlage besteht und daß in der Mitte des Druckkörperzylinders (3) Geräte (13) für Steuerungsund Kontrolleinrichtungen angeordnet sind.

2. Notfallraumfahrzeug gemäß Anspruch 1, **dadurch gekennzeichnet**, daß die Außenfläche des Druckzylinders (3) mit Solargeneratoren (7) und Wärmeradiatoren belegt ist.

3. Notfallraumfahrzeug gemäß Anspruch 1 und 2, **dadurch gekennzeichnet**, daß das Notfallraumfahrzeug über Einrichtungen (8) zur Navigation und Kommunikation sowie über Lageregelungstriebwerke (9) an der Außenseite des Druckzylinders (3) verfügt.

FIG.1

FIG.2

FIG.3

Europäisches Patentamt

**EUROPÄISCHER RECHERCHENBERICHT**

Nummer der Anmeldung

EP 88 10 0091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 606 212 (PAINE) <br> * Insgesamt * <br> --- | 1,3 | B 64 G 1/52 |
| A | JOURNAL OF SPACECRAFT AND ROCKETS, Band 20, Nr. 2, März/April 1983, Seiten 158-163, New York, US; R.T. MAYER: "MOSES (Manned Orbital Space Escape System) - A hypothetical application" <br> * Insgesamt * <br> ----- | 1 | |
| | | | **RECHERCHIERTE SACHGEBIETE (Int. Cl.4)** <br><br> B 64 G |

Der vorliegende Recherchenbericht wurde für alle Patentansprüche erstellt

| Recherchenort | Abschlußdatum der Recherche | Prüfer |
|---|---|---|
| DEN HAAG | 27-04-1988 | HAUGLUSTAINE H.P.M. |